# EUROPEAN PATENT APPLICATION

(11) **EP 4 810 313 A1**
(43) Date of publication of application: **23.09.2026**
(21) Application number: 24899646.4
(22) Date of filing: 22.11.2024
(51) Int. Cl.: B60N 2/02

(54) **SEAT, AUTOMOBILE, CONTROL METHOD FOR ARMREST ASSEMBLY, AND STORAGE MEDIUM**

(30) Priority: 04.12.2023 CN 202311661226
(71) Applicant: Yinwang Intelligent Technologies Co., Ltd., Shenzhen, Guangdong 518110 (CN)
(72) Inventor: XU, Hao, Shenzhen, Guangdong 518129 (CN); ZHANG, Tianzhu, Shenzhen, Guangdong 518129 (CN); SHI, Hao, Shenzhen, Guangdong 518129 (CN); ZHU, Xin, Shenzhen, Guangdong 518129 (CN); GAO, Buwei, Shenzhen, Guangdong 518129 (CN); LI, Bo, Shenzhen, Guangdong 518129 (CN)
(74) Representative: Henselmann, Alexander Gerhard
(86) International application number: PCT/CN2024/133933
(87) International publication number: WO 2025/119005

(57) **Abstract**

This application provides a seat, an automobile, a control method for an armrest assembly, and a storage medium. The seat includes: a seat body; at least one armrest assembly, where the armrest assembly includes a body part, a transmission assembly, and a driving member, the body part is mounted to the seat body, and the driving member is connected to the body part via the transmission assembly; and a controller, configured to: receive a rotation angle detected by a detection component of the seat body, and control the driving member based on the rotation angle to drive the body part to remain in a horizontal state. In this design, the body part can be enabled to automatically remain in the horizontal state, which facilitates use of a user and enhances sitting experience.

## Description

The present invention claims priority to Chinese Patent Application No. 202311661226.1, filed with the China National Intellectual Property Administration on December 4, 2023 and entitled "SEAT, AUTOMOBILE, CONTROL METHOD FOR ARMREST ASSEMBLY, AND STORAGE MEDIUM", which is incorporated herein by reference in its entirety.

### TECHNICAL FIELD

The present invention relates to the field of automobile technologies, and in particular, to a seat, an automobile, a control method for an armrest assembly, and a storage medium.

### BACKGROUND

As technologies develop, an automobile has become a common transportation means for people, and a seat of the automobile is an important component that affects comfort of a passenger in the automobile.

To enhance use experience of a user, an armrest is usually added to the seat, so that the passenger can rest an arm on the armrest when sitting on the seat, thereby improving comfort of the passenger. However, as people have increasingly high requirements on comfort, functions of the seat are increasingly diversified. In addition to a normal seated posture, the seat is adjusted to a state like a reclined posture. However, after a state of the seat changes, comfort of the armrest is reduced. As a result, a requirement of the user on comfort cannot be met.

### SUMMARY

Embodiments of this application provide a seat, an automobile, a control method for an armrest assembly, and a storage medium, to improve comfort of the seat.

An embodiment of this application provides a seat. The seat includes:
a seat body, where the seat body is provided with at least one detection component, and the detection component is configured to detect an angle of a current position of the seat body;
at least one armrest assembly, where the armrest assembly includes a body part, a transmission assembly, and a driving member, the body part is mounted to the seat body, and the driving member is connected to the body part via the transmission assembly; and
a controller, where the controller is configured to: receive the rotation angle detected by the detection component, and control an action of the driving member based on the rotation angle, to drive the body part to rotate until the body part is in a horizontal state.

In this embodiment of this application, when the seat body is adjusted, a position of the body part can be automatically detected and adjusted, to enable the armrest assembly to remain in the horizontal state, so that the armrest assembly can still provide support for an arm of a user even if the user adjusts a state of the seat body. This improve user comfort.

In a possible implementation, the seat body includes a backrest and a seat pan, the backrest and the seat pan are connected and are capable of rotating relative to each other, and the body part is mounted to the backrest;
the detection component includes a first Hall element, and the first Hall element is disposed on the backrest and is configured to detect a rotation angle of the backrest; and/or
the detection component includes a second Hall element, and the second Hall element is disposed on the seat pan and is configured to detect a rotation angle of the seat pan; and
the controller is configured to control the action of the driving member based on the rotation angle of the backrest and/or the rotation angle of the seat pan, to drive the body part to rotate until the body part is in the horizontal state.

In this design, when the user adjusts the seat body, the seat pan and the backrest can be adjusted via the seat body. Angles of the seat pan and the backrest are changed, to enable the seat body to be in different states. For example, the seat body may be in different states such as a seated posture, a half-reclined posture, a reclined posture, and a zero-gravity reclined posture. In addition, users with different body shapes and different sitting habits may adjust the seat body to states appropriate for the users based on their own requirements. When the user adjusts the seat body, the seat body may be in a non-preset state. A preset state may include an initial state and a zero-gravity reclined posture state of the seat. Other states such as a half-reclined posture state, and a seated posture state obtained after the user performs adjustment are non-preset states. Different users have different posture requirements on the seat body. Therefore, in this embodiment of this application, the body part is mounted to the backrest, to enable the body part to move with the backrest when the user adjusts the seat body, and use the driving member to drive the body part to remain in the horizontal state. This can meet a use requirement of the user on an armrest, and improve comfort and use experience of the seat.

In a possible implementation, the seat has a cup holder, and the cup holder is mounted to the body part.

The cup holder is disposed, so that the user can place an object like a water cup. Compared with a manner in which the cup holder is disposed separately from the armrest, for example, the cup holder is disposed at a position like a dashboard or a console of the automobile, a manner in which the cup holder is integrated with the armrest assembly is more convenient to place or take the object in the cup holder. When the user adjusts a posture of the seat body, the cup holder is correspondingly adjusted with the body part, so that the user can place or take the object in the cup holder in different postures. In addition, in the solution provided in this embodiment of this application, the body part can be driven via the driving member to remain in the horizontal state. Therefore, when the user adjusts the posture of the seat body, the cup holder disposed on the body part can also remain in the horizontal state. This can reduce a possibility that the object in the cup holder falls or liquid in the cup holder spills, reduce a possibility of causing a burn to the user or an accident like an electrical risk due to the spilled liquid, improve safety, and better meet an actual use requirement.

In a possible implementation, the body part has an accommodation cavity, the cup holder is capable of moving along the accommodation cavity, and at least a part of the cup holder is capable of extending out or retracting relative to the accommodation cavity.

In this design, a relative position between the cup holder and the body part can be adjusted. When the cup holder needs to be used, the cup holder can extend out, and when the cup holder does not need to be used, the cup holder can retract for storage. This can reduce space occupied by the cup holder, and better meet an actual use requirement.

In a possible implementation, the driving member is a Hall drive motor.

The Hall drive motor can detect a rotation angle of the body part while driving the body part to rotate.

In a possible implementation, the seat includes two armrest assemblies, and the armrest assemblies are armrest assemblies located on two opposite sides of the seat body in a width direction of the seat.

The armrest assemblies are disposed on the two sides of the seat body. This can enhance sitting experience of the user, and can better meet the actual use requirement.

In a possible implementation, the transmission assembly includes a speed reducer, a gear, and an angle adjuster, the driving member is connected to the speed reducer, the angle adjuster is mounted to the body part, and the speed reducer is connected to the angle adjuster via the gear.

In this design, the driving member is connected to the body part and drives the body part to rotate.

An embodiment of this application further provides an automobile. The automobile includes:
an automobile body; and
a seat, where the seat is mounted to the automobile body; and
the seat is the seat according to any one above.

An embodiment of this application further provides a control method for an armrest assembly. The armrest assembly is mounted to a seat body, and the control method includes:
detecting an angle of a current position of the seat body; and
controlling, based on the angle of the current position, the armrest assembly to rotate to a horizontal state.

In this design, the armrest assembly of a seat can be controlled to be adjusted to the horizontal state, to facilitate use of a user. When the user adjusts an angle of the seat body, the armrest assembly can be adjusted by detecting the angle of the current position of the seat body, to enable the armrest assembly to be in the horizontal state. This helps improve user comfort.

In a possible implementation, the seat body includes a backrest and a seat pan, the armrest assembly is mounted to the backrest, and when the rotation angle of the seat body is detected, the control method includes:
detecting an angle of a current position of the backrest.

The armrest assembly is mounted to the backrest. Therefore, when the user adjusts the backrest, the armrest assembly moves with the backrest, the angle of the current position of the backrest can be detected, and the armrest assembly is adjusted based on the angle of the current position of the backrest, to enable the armrest assembly to be in the horizontal state. This improves the user comfort.

In a possible implementation, before detecting the angle of the current position of the seat body, the control method further includes:
receiving a preset state, of the seat body, set by a user; and
controlling, based on the preset state, the backrest of the seat body to rotate to a preset angle corresponding to the preset state, and controlling the armrest assembly to remain horizontal in a rotation process of the seat body.

The user can preset a posture of the seat body on an operation screen disposed on the seat body or the armrest assembly. This meets a use requirement of the user. In addition, in a process of adjusting the seat body to the preset state, the armrest assembly is controlled to rotate relative to the seat body, to enable the armrest assembly to be always in the horizontal state.

In a possible implementation, the preset state includes a reclined posture, a seated posture, and any state between the reclined posture and the seated posture.

The preset state may be a posture commonly used by the user, and includes but is not limited to the seated posture, the reclined posture, and the any posture between the seated posture and the reclined posture. Alternatively, a posture of the seat body can be preset by limiting an angle of the backrest.

In a possible implementation, when it is detected that the angle of the current position of the seat body is a first preset angle α, the armrest assembly is controlled to rotate by a second preset angle β.

In a possible implementation, the control method further includes:
after an automobile is powered off, controlling at least one armrest assembly to rotate to have a preset included angle between the armrest assembly and the seat body.

An embodiment of this application further provides a storage medium. The storage medium is used in the control method for the armrest assembly according to any one above.

Embodiments of this application provide the seat, the automobile, the control method for the armrest assembly, and the storage medium. The seat includes: the seat body; the at least one armrest assembly, where the armrest assembly includes the body part, the transmission assembly, and the driving member, the body part is mounted to the seat body, and the driving member is connected to the body part via the transmission assembly; and the controller, configured to: receive the rotation angle detected by the detection component of the seat body, and control the driving member based on the rotation angle to drive the body part to remain in the horizontal state. In this design, the body part can be enabled to automatically remain in the horizontal state, which facilitates use of the user and enhances the sitting experience.

### BRIEF DESCRIPTION OF DRAWINGS

FIG. 1 is a diagram of a seat in a first state according to this application;
FIG. 2 is a diagram of an armrest assembly according to this application;
FIG. 3 is an exploded diagram of an armrest assembly and a controller according to this application;
FIG. 4 is a diagram of a Hall effect according to this application;
FIG. 5 is a diagram of an operating principle of a driving member according to this application;
FIG. 6 is a diagram of Hall signals according to this application;
FIG. 7 is a diagram of a seat in a second state according to this application;
FIG. 8 is a diagram of control of a controller according to this application;
FIG. 9 is a diagram of a control method for an armrest assembly according to this application; and
FIG. 10 is a diagram of a seat in a third state according to this application.

Reference numerals:
1: seat body; 11: backrest; 12: seat pan; 2: armrest assembly; 21: body part; 211: frame; 22: transmission assembly; 221: reducer; 222: gear; 223: angle adjuster; 23: driving member; and 3: cup holder.

### DESCRIPTION OF EMBODIMENTS

To better understand technical solutions of this application, the following describes embodiments of this application in detail with reference to accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

As technologies develop, an automobile has become a common transportation means for people, and a seat of the automobile is one of important factors that affect sitting comfort of a passenger. To enhance sitting experience of the passenger, an armrest may be disposed on one side or armrests may be disposed on two sides of the seat. When the passenger sits, the passenger may rest an arm on the armrest, to obtain more comfortable experience. As people's life and work scenarios in the automobile become more frequent, functions of the seat are increasingly diversified. In addition to a normal seated posture, a zero-gravity reclined posture and the like can be implemented by adjusting a backrest and a seat pan of the seat. However, when a state of the seat changes, a position of the armrest designed for the seated posture cannot meet a requirement in a state like the reclined posture. When the seat is in the state like the reclined posture, the armrest cannot meet a use requirement of the passenger. This affects comfort of the seat.

In view of this, embodiments of this application provide a seat, an automobile, a control method for an armrest assembly, and a storage medium, to improve comfort of the seat and meet a use requirement of a user.

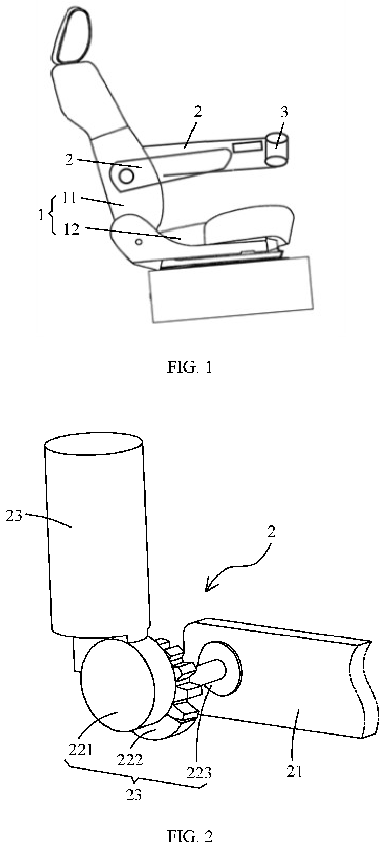

As shown in FIG. 1, an embodiment of this application provides a seat. The seat may be used in a transportation means like an automobile. The seat includes a seat body 1 and at least one armrest assembly 2, and the armrest assembly 2 is mounted to the seat body 1.

As shown in FIG. 2, the armrest assembly 2 includes a body part 21, a transmission assembly 22, and a driving member 23. The body part 21 may be made of a metal frame, and the driving member 23 may be a Hall drive motor, or may be another driving apparatus, for example, a stepper motor, that can detect a rotation angle. The driving member 23 is connected to the body part 21 via the transmission assembly 22, to drive the body part 21 to rotate relative to the seat body 1. The transmission assembly 22 may include a gear 222, a reducer 221, and an angle adjuster 223. An output end of the driving member 23 is connected to the reducer 221, and via the gear 222, the reducer 221 is connected to the angle adjuster 223 mounted to the body part 21. The reducer 221 has a speed reduction function. The gear 222 is configured to transmit a driving force to the angle adjuster 223. The angle adjuster 223 can adjust an angle of the body part 21, to change a relative position between the body part 21 and the seat body 1.

The seat body 1 is provided with at least one detection component. The detection component may be a Hall element, and is configured to detect motion of the seat body 1.

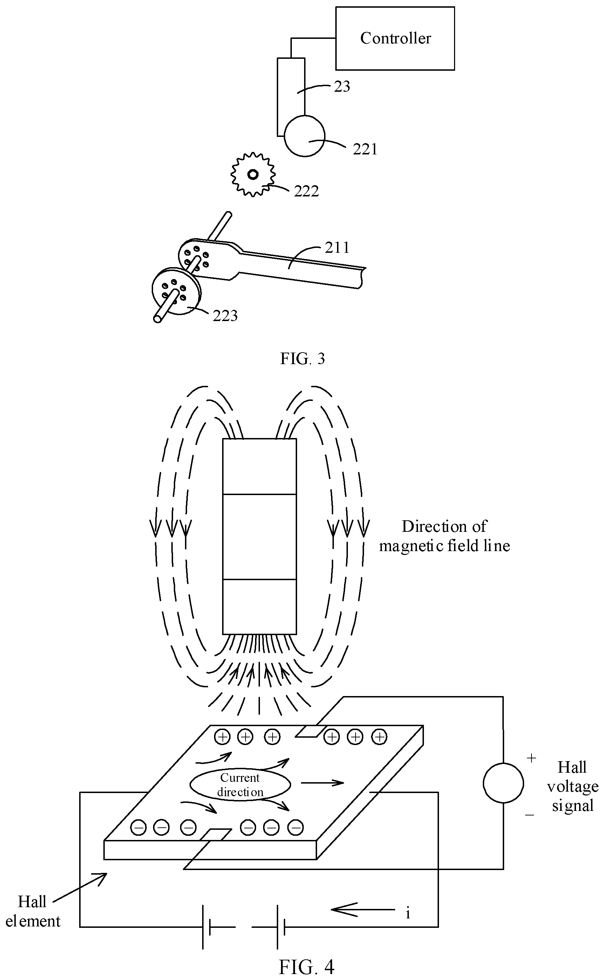

As shown in FIG. 3, the body part 21 may include a frame 211, and the transmission assembly 22 is connected to the body part 21 via the frame 211. The body part 21 may further include a plastic member, a wrapping member, and the like that are disposed on an outer side of the frame 211, to improve comfort of a user when the user uses the armrest assembly 2. The seat further includes a controller. The controller may be mounted to the seat body 1, or may be disposed at another position like a console of the automobile. This is not limited herein.

The seat body 1 is provided with at least one detection component. The detection component may be the Hall element, and is configured to detect motion of the seat body 1 and send detection information to the controller. The detection information is used to reflect a rotation angle of the seat body 1.

The controller is configured to: receive the detection information sent by the detection component, and send a control signal to the driving member 23 based on the detection information, to enable the driving member 23 to drive the body part 21 to rotate relative to the seat body 1 by the rotation angle. In other words, the controller can control an action of the driving member 23 based on the rotation angle detected by the detection component, to drive the body part 21 to rotate until the body part 21 is in a horizontal state.

The driving member 23 may include a Hall effect sensor and a driving apparatus. The driving apparatus is configured to drive the body part 21 to move relative to the seat body 1. The Hall effect sensor is configured to detect the relative position between the body part 21 and the seat body 1. The driving apparatus can adjust the relative position between the body part 21 and the seat body 1 based on the signal from the controller, to enable the body part 21 to be in the horizontal state.

The driving member 23 may be the Hall drive motor.

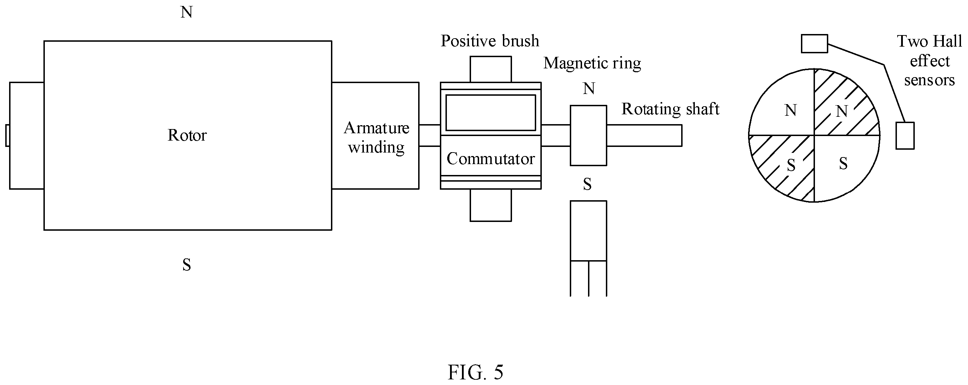

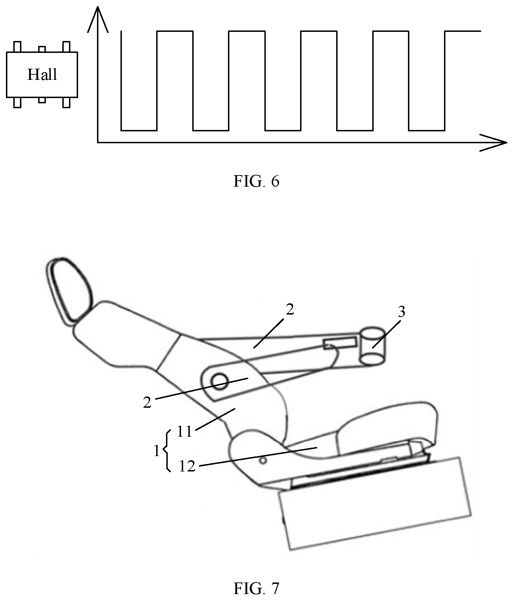

The Hall drive motor detects a position of the body part 21 through a Hall effect, and drives the body part 21 to move relative to the seat body 1. As shown in FIG. 4, the Hall effect is caused by interaction between an electric field and a magnetic field of charged particles (for example, electrons). When the electrons move in the magnetic field, the electrons are affected by a Lorentz force. When the electrons (negative charges) move upward, currents (positive charges) generated by the electrons move downward. According to a left-hand rule, the electrons are subject to a force to the right, and charges in a thin plate tilt to one side. As a result, an electric potential difference, namely, a Hall voltage, is formed on left and right sides. This is a basic principle of generating a Hall signal. FIG. 5 shows an operating principle of the Hall drive motor. The Hall drive motor collects, via a magnetic ring and Hall effect sensors implanted in a brush direct current motor, the Hall signal generated on a rotor of the motor. The motor may include components such as the rotor, an armature winding, a positive brush, a commutator, and a rotating shaft. The motor is integrated with the Hall effect sensors. Each time the motor rotates for one cycle, a group of square wave signals shown in FIG. 6 are generated. Frequencies and a quantity of Hall signals are analyzed to control an unknown angle position. In other words, when driving the body part 21 to move, the Hall drive motor can be further configured to detect a rotation angle and the position of the body part 21.

In this embodiment of this application, when the seat body 1 is adjusted, the position of the body part 21 can be automatically detected and adjusted, to enable the armrest assembly 2 to remain in the horizontal state, so that the armrest assembly 2 can still provide support for an arm of the user even if the user adjusts a state of the seat body shown in FIG. 1 to a state shown in FIG. 7. This improves comfort of the user.

The state of the seat shown in FIG. 1 may be a normal seated posture state, and the state of the seat shown in FIG. 7 may be a zero-gravity reclined state.

In a solution in which the armrest is disposed separately from the seat body 1, for example, the armrest is mounted to a chassis, a console, or the like of the automobile, when the user adjusts the state of the seat body 1, and the state of the seat body 1 changes, a position of the armrest remains unchanged because the armrest and the seat body 1 are disposed independently. However, requirements for positions of the armrest are different when the user is in different states. For example, when the user adjusts the seat body 1 from the seated posture to the reclined posture, a relative position between the armrest and the seat body 1 changes. Consequently, a position, of the armrest, applicable to the seated posture is not applicable to the reclined posture. In comparison, in the solution provided in this embodiment of this application, the armrest assembly 2 is mounted to the seat body 1. Therefore, when the state of the seat body 1 is adjusted, the position of the armrest assembly 2 can change with the seat body 1. In addition, the position of the body part 21 is detected via the driving member 23, to enable the body part 21 can be in the horizontal state when the seat body 1 is in different postures, so that the user can rest the arm on the body part 21. This enhances sitting experience and comfort.

It should be noted herein that the horizontal state mentioned in embodiments of this application is not horizontal in an absolute sense, but is approximately the horizontal state.

In this design, the body part 21 can be applicable to the seat body 1 in different states, and the user can rest the arm on the armrest assembly 2 comfortably when sitting in different postures. This enhances sitting experience of the user.

As shown in FIG. 7, in a possible implementation, the seat body 1 includes a seat pan 12 and a backrest 11, and the backrest 11 is connected to the seat pan 12. The user may sit on the seat pan 12 and lean against the backrest 11. The backrest 11 and the seat pan 12 may move relative to each other, and an angle of the seat pan 12 may also be adjusted. The body part 21 may be mounted to the backrest 11.

The detection component includes at least a first Hall element and/or second Hall element. The first Hall element is configured to detect a rotation angle of the backrest 11, and the second Hall element is configured to detect a rotation angle of the seat pan 12. Both the first Hall element and the second Hall element may send the detection result to the controller. The controller analyzes the detection result from the first Hall element and/or the detection result from the second Hall element, calculates an angle by which the body part 21 of the armrest assembly 2 needs to be rotated to remain in the horizontal state, and sends a signal to the driving member 23. The driving member 23 controls, based on the signal, the body part 21 to rotate relative to the backrest 11, to enable the body part 21 to remain in the horizontal state.

In this design, when the user adjusts the seat body 1, the seat pan 12 and the backrest 11 can be adjusted. Angles of the seat pan 12 and the backrest 11 are changed, to enable the seat body 1 to be in different states. For example, the seat body 1 may be in different states such as a seated posture, a half-reclined posture, a reclined posture, and a zero-gravity reclined posture. In addition, users with different body shapes and different sitting habits may adjust the seat body 1 to states appropriate for the users based on their own requirements. When the user adjusts the seat body 1, the seat body 1 may be in a non-preset state. A preset state may include an initial state and a "zero-gravity" reclined posture state of the seat. Other states such as a half-reclined posture state, and a seated posture state obtained after the user performs adjustment are non-preset states. Different users have different posture requirements on the seat body 1. Therefore, in this embodiment of this application, the body part 21 is mounted to the backrest 11, to enable the body part 21 to move with the backrest 11 when the user adjusts the seat body 1, and use the driving member 23 to drive the body part 21 to remain in the horizontal state. This can meet the use requirement of the user on the armrest, and improve comfort and use experience of the seat.

As shown in FIG. 7, in a possible implementation, the seat provided in this application may further include a cup holder 3, and the cup holder 3 is mounted to the body part 21.

The cup holder 3 is disposed, so that the user can place an object like a water cup. Compared with a manner in which the cup holder 3 is disposed separately from the armrest, for example, the cup holder 3 is disposed at a position like a dashboard or a console of the automobile, a manner in which the cup holder 3 is integrated with the armrest assembly 2 is more convenient to place or take the object in the cup holder 3. When the user adjusts a posture of the seat body 1, the cup holder 3 is correspondingly adjusted with the body part 21, so that the user can place or take the object in the cup holder 3 in different postures. In addition, in the solution provided in this embodiment of this application, the body part 21 can be driven via the driving member 23 to remain in the horizontal state. Therefore, when the user adjusts the posture of the seat body 1, the cup holder 3 disposed on the body part 21 can also remain in the horizontal state. This can reduce a possibility that the object in the cup holder 3 falls or liquid in the cup holder spills, reduce a possibility of causing a burn to the user or an accident like an electrical risk due to the spilled liquid, improve safety, and better meet an actual use requirement.

In a possible implementation, the body part 21 has an accommodation cavity, the cup holder 3 is capable of moving along the accommodation cavity, and at least a part of the cup holder 3 is capable of extending out or retracting relative to the accommodation cavity.

In this design, a relative position between the cup holder 3 and the body part 21 can be adjusted. When the cup holder 3 needs to be used, the cup holder 3 can extend out, and when the cup holder 3 does not need to be used, the cup holder 3 can retract for storage. This can reduce space occupied by the cup holder 3, and better meet an actual use requirement.

As shown in FIG. 7, in a possible implementation, the seat includes two armrest assemblies 2, and the armrest assemblies 2 are located on two opposite sides of the seat body 1 in a width direction of the seat.

The armrest assemblies are disposed on the two sides of the seat body 1. This can enhance sitting experience of the user, and can better meet the actual use requirement.

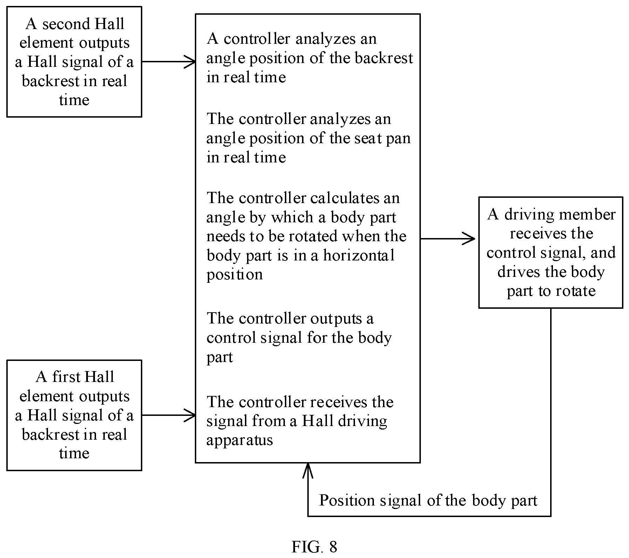

As shown in FIG. 8, when the seat provided in this embodiment of this application is used, the first Hall element and the second Hall element may respectively output the Hall signal of the backrest 11 and the Hall signal of the seat pan 12 to the controller in real time. The controller analyzes an angle position of the backrest 11 and an angle position of the seat pan 12 in real time based on the received Hall signals, calculates, the angle by which the armrest needs to be rotated to be in the horizontal state, and outputs the corresponding signal to the driving member 23. After receiving the signal from the controller, the driving member 23 drives the body part 21 to rotate relative to the seat body 1, to enable the body part 21 to be in the horizontal state. In addition, the Hall driving apparatus feeds back a position signal of the body part 21 to the controller, so that the controller can monitor and adjust the position of the body part 21 in real time. The controller may record position states of the seat body 1 and the armrest assembly 2.

Based on the seat in the foregoing embodiments, an embodiment of this application further provides an automobile. The automobile includes an automobile body and a seat, and the seat is mounted to the automobile body. The seat may be the seat in any one of the foregoing embodiments. The seat has the foregoing technical effect, and therefore the automobile including the seat also has the foregoing technical effect. Details are not described herein again.

An embodiment of this application further provides a control method for an armrest assembly 2, and the method may be applied to the seat described above.

The armrest assembly 2 is mounted to a seat body 1, and the control method includes:
detecting an angle of a current position of the seat body 1; and
controlling, based on the angle of the current position, the armrest assembly 2 to rotate to a horizontal state.

In this design, the armrest assembly 2 of the seat can be controlled to be adjusted to the horizontal state, to facilitate use of a user. When the user adjusts an angle of the seat body 1, the armrest assembly 2 can be adjusted by detecting the angle of the current position of the seat body 1, to enable the armrest assembly 2 to be in the horizontal state. This helps improve user comfort.

The seat body 1 includes a backrest 11 and a seat pan 12, the armrest assembly 2 is mounted to the backrest 11, and when a rotation angle of the seat body 1 is detected, the control method includes:
detecting an angle of a current position of the backrest 11.

The armrest assembly 2 is mounted to the backrest 11. Therefore, when the user adjusts the backrest 11, the armrest assembly 2 moves with the backrest 11, the angle of the current position of the backrest 11 can be detected, and the armrest assembly 2 is adjusted based on the angle of the current position of the backrest 11, to enable the armrest assembly 2 to be in the horizontal state. This improves the user comfort.

In a possible implementation, a first Hall element and a second Hall element may be disposed on the seat. The first Hall element is configured to detect an adjusted angle of the backrest 11, and the second Hall element is configured to detect an adjusted angle of the seat pan 12. When the user adjusts the backrest 11 separately, the armrest assembly 2 moves with the backrest 11. When the user adjusts the seat pan 12, the backrest 11 moves with the seat pan 12. Therefore, the two Hall elements can be disposed to accurately detect the angle of the current position of the backrest 11. A controller may calculate the angle of the current position of the backrest 11 based on the detection results from the first Hall element and the second Hall element, and control, based on the position angle, a driving member 23 to adjust a body part 21.

Before detecting the angle of the current position of the seat body 1, the control method further includes:
receiving a preset state, of the seat body 1, set by a user; and
controlling, based on the preset state, the backrest 11 of the seat body 1 to rotate to a preset angle corresponding to the preset state, and controlling the armrest assembly 2 to remain horizontal in a rotation process of the seat body 1.

The user can preset a posture of the seat body 1 on an operation screen disposed on the seat body 1 or the armrest assembly 2. This meets a use requirement of the user. In addition, in a process of adjusting the seat body 1 to the preset state, the armrest assembly 2 is controlled to rotate relative to the seat body 1, to enable the armrest assembly 2 to be always in the horizontal state.

A posture of the seat body 1 is preset, so that the seat body 1 can be directly and automatically adjusted to the corresponding state after the user makes a selection, and is used more conveniently.

In a possible implementation, the preset state includes a reclined posture, a seated posture, and any state between the reclined posture and the seated posture.

The preset state may be a posture commonly used by the user, and includes but is not limited to the seated posture, the reclined posture, and the any posture between the seated posture and the reclined posture. Alternatively, the posture of the seat body 1 can be preset by limiting an angle of the backrest 11.

During use, the user may directly select the preset state, and the controller automatically adjusts the seat body 1 based on the selected posture, and remains the armrest assembly 2 horizontal in an adjustment process.

In a possible implementation, when it is detected that the angle of the current position of the seat body 1 is a first preset angle α, the armrest assembly 2 is controlled to rotate by a second preset angle β.

The controller may adjust the angle of the armrest assembly 2 based on the angle of the seat body 1.

Generally, when the armrest assembly 2 is in the horizontal state and the user adjusts the posture of the seat body 1, α and β may satisfy α=-β. When the armrest assembly 2 is not in the horizontal state, the controller may calculate the angle by which the armrest assembly 2 needs to be rotated from a current state to the horizontal state, and calculate β with reference to the current position angle α of the seat body 1.

In a possible implementation, the control method further includes:
after the automobile is powered off, controlling at least one armrest assembly 2 to rotate to have a preset included angle between the armrest assembly and the seat body 1.

The control method may include a greeting mode. After the automobile is powered off, the controller can control the at least one armrest assembly 2 to rotate to have the preset included angle between the armrest assembly and the seat body 1. Generally, an armrest assembly 2 close to an automobile door can be rotated, to enable the body part 21 to be parallel to the backrest 11, so that the user can get off the automobile. When the user gets on the automobile, whether the user sits on the seat can be determined by using whether the user fastens a safety belt.

When the user gets off the automobile, whether power is off is usually used as a determining basis. When whether the user removes the safety belt is used as a basis for ending control, because a position at which the safety belt is fastened or removed is usually close to a position of the armrest, the user is likely to bump into the armrest.

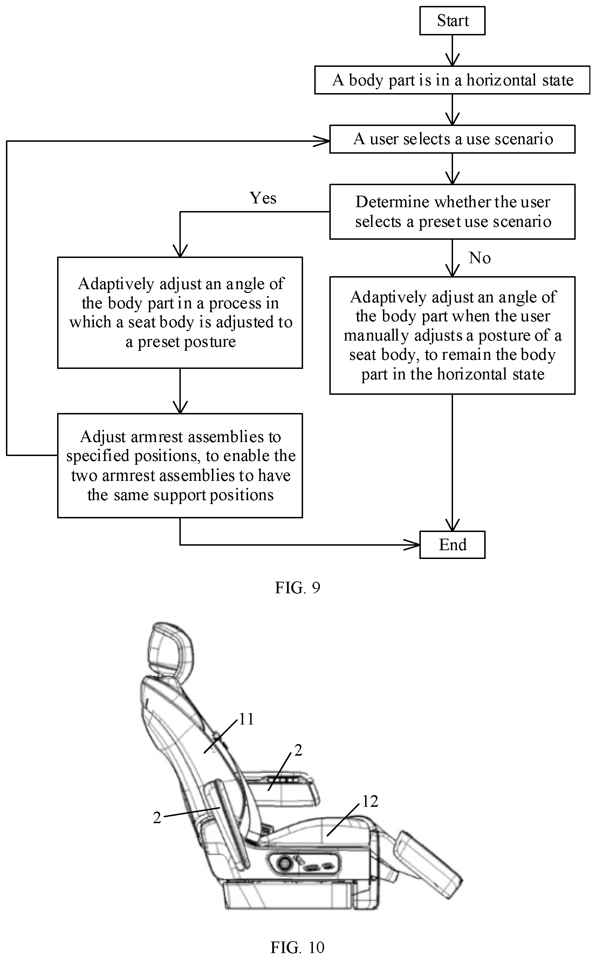

As shown in FIG. 9, in a possible implementation, when the user sits on the seat and starts to control the seat, the body part 21 may be adjusted to be in the horizontal state, to facilitate sitting of the user. The user may select a use scenario to control the seat. When the user selects a preset use scenario, the controller controls the seat body 1 to automatically adjust to the preset state, and controls the armrest assembly 2 to remain horizontal in the adjustment process. When the armrest assemblies 2 are disposed on the two sides of the seat, the controller controls the armrest assemblies 2 on the two sides to be adjusted to specified positions, that is, the two armrest assemblies 2 are both in the horizontal state, to enable the two armrest assemblies 2 to have the same support positions. When the user does not select a preset use scenario and selects to adjust the state of the seat body 1, the controller obtains the angle of the current position of the seat body 1 in real time based on the first Hall element and the second Hall element, and controls the driving member 23 to drive the body part 21 to rotate, to adjust the state of the armrest assembly 2 in real time, and enable the armrest assembly 2 to remain in the horizontal state. When the automobile is powered off, control ends.

In actual use, after the user gets off the automobile, the armrest assembly 2 rotates and is folded. When the user sits on the seat next time, the armrest assembly 2 may not be adjusted to be horizontal first, and waits for the user to select the use scenario. After the user selects the use scenario, the armrest assembly 2 is adjusted to be horizontal in a process of adjusting to the corresponding use scenario.

As shown in FIG. 10, the armrest on one side of the seat is in a storage position, to enable the user to get on or off the automobile.

An embodiment of this application further provides a storage medium. The storage medium is used to store the control method for the armrest assembly according to any one above.

Embodiments of this application provide the seat, the automobile, the control method for the armrest assembly, and the storage medium. The seat includes: the seat body 1; the at least one armrest assembly 2, where the armrest assembly 2 includes the body part 21, the transmission assembly 22, and the driving member 23, the body part 21 is mounted to the seat body 1, and the driving member 23 is connected to the body part 21 via the transmission assembly 22; and the controller, configured to: receive the rotation angle detected by the detection component of the seat body 1, and control the driving member 23 based on the rotation angle to drive the body part 21 to remain in the horizontal state. In this design, the body part 21 can be enabled to automatically remain in the horizontal state, which facilitates use of the user and enhances the sitting experience.

In the present invention, an automobile seat armrest structure having an angle adaptive function and with the cup holder can resolve the following problems:

In the zero-gravity reclined posture or the reclined posture, it is inconvenient to place or take the cup holder due to a posture limitation of a person. In the reclined posture, the angle of the armrest is non-horizontal, which affects comfort. In addition, when the angle of the armrest is adjusted, the cup holder rotates with the armrest, and water in the cup is likely to spill and overturn, causing a burn to the passenger and causing an electrical risk. For pain points of an existing seat armrest and cup holder, the automobile seat armrest structure having the angle adaptive function and with the cup holder is invented, to improve comfort of using the armrest and convenience and safety of using the cup holder.

The retractable cup holder and the electric movable armrest are arranged on the comfort seat. According to a specific control logic, the armrest can always maintain the horizontal comfortable angle based on the posture of the seat, which is applicable to an in-vehicle environment and achieves good sitting comfort. The seat armrest may be inherited from the seat body, which can save space and achieve good space experience. The seat armrest is applicable to a zero-gravity reclined seat posture scenario, a scenario in which the user normally adjusts angles of the backrest and a seat pan, and a scenario of getting on and off the automobile, to always maintain the horizontal comfortable angle of the armrest in real time based on the seat posture. This improves sitting comfort and use convenience, and avoids the electrical risk and a safety risk of the burn to the passenger that are caused by overturning and spilling of the water in the cup holder when the cup holder rotates with the armrest.

An electric armrest horizontal adaptive structure (the Hall dirver motor, the controller, the armrest structure, and the cup holder) is used.

The control logic of using the automobile seat armrest having the angle adaptive function and with the cup holder includes different control logics in the zero-gravity reclined posture and a non-zero-gravity reclined posture.

A control logic in the greeting mode for getting on the automobile is as follows: After the automobile is powered off, the armrest is retracted upwards. After the user gets on the automobile and fastens the safety belt, the armrest automatically drops to the horizontal position.

The seat with a dual electric armrest horizontal adaptive structure is used.

The dual-armrest seat includes an outer electric armrest and an inner electric movable adaptive armrest. An electric adaptive armrest body includes functional members such as the armrest body, an armrest frame support, external plastic member and wrapping member of the armrest, and the hidden cup holder.

The control logic of using the automobile seat armrest having the angle adaptive function and with the cup holder is used.

A principle of implementing horizontal adaptation is as follows:
(1) The **Hall dirver motor** obtains an angle of the backrest and a rotation angle of the seat pan in real time.
(2) The controller collects angle information of the backrest and the seat pan in real time, calculates, by using a logical algorithm, the angle by which the armrest needs to be rotated to enable the armrest to rotate to the horizontal position, and sends the signal to an armrest motor, to drive the armrest **Hall dirver motor** to rotate to a specific position (the horizontal position or a nearby position).

An adaptive movable armrest structure is used.

The electric armrest includes an armrest rotation structure, the **Hall dirver motor**, and its transmission structure (the reducer, the transmission gear, and the angle adjuster), a control unit (chair controller), and the like. The electric adaptive armrest body includes the functional members such as the armrest body, the armrest frame support, the external plastic member and wrapping member of the armrest, and the pop-up cup holder.

In the solutions provided in embodiments of this application, the Hall principle is used to identify a position of the seat, and the **Hall dirver motor** is used to identify the angle position of the seat pan, the angle position of the backrest, and the angle position of the armrest. The **Hall dirver motor** is used to determine whether the armrest has reached a predetermined angle and position.

The control logic of using the automobile seat armrest having the angle adaptive function and with the cup holder is used. The specific control logic is used and is applicable to the in-vehicle environment. The position and the posture of the armrest are automatically and dynamically adjusted in the adjustment process, so that the angle always remains in the horizontal state, and the water in the cup holder is not spilled. The specific control logic is applicable to a scenario in which the zero-gravity reclined posture is implemented, and is also applicable to a scenario in which the user normally sits and adjusts the backrest and the seat pan of the seat.

The adaptive movable armrest structure is used. The electric armrest includes the armrest rotation structure, the **Hall dirver motor**, and its transmission structure (the reducer, the transmission gear, and the angle adjuster), the control unit (chair controller), and the like. Under the control of the motor and the controller, the mechanical structure can implement adaptive horizontal effect of the armrest.

The control logic in the greeting mode for getting on the automobile is as follows: After the automobile is powered off, the armrest is retracted upwards. After the user gets on the automobile and fastens the safety belt, the armrest automatically drops to the horizontal position. This facilitates the user to fasten and remove the safety belt, and enhances the sitting experience.

## Claims

1. A seat, wherein the seat comprises:
a seat body, wherein the seat body is provided with at least one detection component, and the detection component is configured to detect an angle of a current position of the seat body;
at least one armrest assembly, wherein the armrest assembly comprises a body part, a transmission assembly, and a driving member, the body part is mounted to the seat body, and the driving member is connected to the body part via the transmission assembly; and
a controller, wherein the controller is configured to: receive the rotation angle detected by the detection component, and control an action of the driving member based on the rotation angle, to drive the body part to rotate until the body part is in a horizontal state.

2. The seat according to claim 1, wherein the seat body comprises a backrest and a seat pan, the backrest and the seat pan are connected and are capable of rotating relative to each other, and the body part is mounted to the backrest;
the detection component comprises a first Hall element, and the first Hall element is disposed on the backrest and is configured to detect a rotation angle of the backrest; and/or
the detection component comprises a second Hall element, and the second Hall element is disposed on the seat pan and is configured to detect a rotation angle of the seat pan; and
the controller is configured to control the action of the driving member based on the rotation angle of the backrest and/or the rotation angle of the seat pan, to drive the body part to rotate until the body part is in the horizontal state.

3. The seat according to claim 1, wherein the seat has a cup holder, and the cup holder is mounted to the body part.

4. The seat according to claim 3, wherein the body part has an accommodation cavity, the cup holder is capable of moving along the accommodation cavity, and at least a part of the cup holder is capable of extending out or retracting relative to the accommodation cavity.

5. The seat according to any one of claims 1 to 4, wherein the driving member is a Hall drive motor.

6. The seat according to any one of claims 1 to 4, wherein the seat comprises two armrest assemblies, and the armrest assemblies are armrest assemblies located on two opposite sides of the seat body in a width direction of the seat.

7. The seat according to any one of claims 1 to 4, wherein the transmission assembly comprises a speed reducer, a gear, and an angle adjuster, the driving member is connected to the speed reducer, the angle adjuster is mounted to the body part, and the speed reducer is connected to the angle adjuster via the gear.

8. An automobile, wherein the automobile comprises:
an automobile body; and
a seat, wherein the seat is mounted to the automobile body; and
the seat is the seat according to any one of claims 1 to 7.

9. A control method for an armrest assembly, wherein the armrest assembly is mounted to a seat body, and the control method comprises:
detecting an angle of a current position of the seat body; and
controlling, based on the angle of the current position, the armrest assembly to rotate to a horizontal state.

10. The control method for the armrest assembly according to claim 9, wherein the seat body comprises a backrest and a seat pan, the armrest assembly is mounted to the backrest, and when a rotation angle of the seat body is detected, the control method comprises:
detecting an angle of a current position of the backrest.

11. The control method for the armrest assembly according to claim 9, wherein before detecting the angle of the current position of the seat body, the control method further comprises:
receiving a preset state, of the seat body, set by a user; and
controlling, based on the preset state, the backrest of the seat body to rotate to a preset angle corresponding to the preset state, and controlling the armrest assembly to remain horizontal in a rotation process of the seat body.

12. The control method for the armrest assembly according to claim 11, wherein the preset state comprises a reclined posture, a seated posture, and any state between the reclined posture and the seated posture.

13. The control method for the armrest assembly according to claim 9, wherein when it is detected that the angle of the current position of the seat body is a first preset angle α, the armrest assembly is controlled to rotate by a second preset angle β.

14. The control method for the armrest assembly according to any one of claims 9 to 13, wherein the control method further comprises:
after an automobile is powered off, controlling at least one armrest assembly to rotate to have a preset included angle between the armrest assembly and the seat body.

15. A storage medium, wherein the storage medium is configured to store the control method for the armrest assembly according to any one of claims 9 to 14.
